# EUROPEAN PATENT SPECIFICATION

(11) **EP 1 520 679 B1**
(45) Date of publication and mention of the grant of the patent: **05.07.2006**
(21) Application number: 04022408.1
(22) Date of filing: 21.09.2004
(51) Int. Cl.: B29C 45/54, B29C 45/07

(54) **An injection moulding machine having an alternating injection plunger and a plasticizing screw**
Spritzgiessmaschine mit alternierendem Einspritzkolben und Plastifizierschnecke
Presse à injecter avec piston à injecter et vis de plastification alternants

(30) Priority: 03.10.2003 IT mi20031907
(43) Date of publication of application: 06.04.2005
(73) Proprietor: RUTIL S.r.l., 21050 Lonate Ceppino (Varese) (IT)
(72) Inventor: Coscia, Giovanni Antonio, 21100 Varese VA (IT)
(74) Representative: Faraggiana, Vittorio

(56) References cited:
- IT-B- 1 243 848
- US-A- 3 810 728
- PATENT ABSTRACTS OF JAPAN vol. 0092, no. 49 (M-419), 5 October 1985 (1985-10-05) & JP 60 101020 A (TOYODA GOSEI KK), 5 June 1985 (1985-06-05)

## Description

The present invention relates to an injection moulding machine, in particular for rubber or plastic material.

In the field of presses for injection moulding, the injector unit for injecting the material into the mould has technical problems of great importance.

The traditional machines of the known art (those having a reciprocal screw or a screw with a piston, for example) comprise a plasticizing screw assembly adapted to feed the injection chamber with the material for the mould. These machines also comprise a non-return valve necessary to prevent return of the material from the injection chamber to the plasticizing screw assembly when the rubber injection takes place. Movements enabling closure of the valve occur due to generation of the injection pressure within the chamber, and are of an uncertain duration. This fact involves an unsatisfactory precision in metering the injection amount because the whole material of a batch is not fully injected into the mould, but part of it flows back to the plasticizing screw assembly during the closure movement of the valve. Furthermore, IT-B-1243848 discloses an injection moulding machine having equally unsatisfactory metering precision.

In order to solve the problem concerning metering of the material, attempts have been made to use valves of the hydraulic type; this solution however, appears to be not very efficient, weakly reliable and subjected to quick wear. More recently moulding machines have been devised that are provided with an injector unit operating in the absence of nonreturn valves and introducing the material from the same end of the chamber designed for subsequent delivery to the mould. These machines ensure a satisfactory and precise metering of the material to be injected into the mould. However, the work behaviour of the injector unit is of the LIFO (Last In First Out) type, i.e. the last material portions introduced into the injector are also the first ones to come out therefrom and move to the mould. This situation is typically negative because part of the rubber remain within the injection chamber for longer periods than the rest of the material; this phenomenon can cause partial burns and lack of homogeneity in the material within the injection chamber (and therefore in the mould), which will bring about a decay in the quality of the final product.

It is a general aim of the present invention to obviate the above mentioned drawbacks by providing an injection moulding machine enabling a very precise metering of the material to be injected, a continuous change of the rubber (or the plastic material) within the injector and, consequently, a satisfactory homogeneity of the material injected into the mould.

In view of the above aim an injection moulding machine has been devised, in accordance with the invention, which comprises:
- a body provided with a rectilinear cavity having a first end which is open and a second end opposite to the first one, in which a nozzle for injection into the mould is disposed;
- a floating punch that is slidable within the cavity in the hollow body between said first and second ends to define an injection chamber with said second end, said punch being provided with a passage to supply a way for access to the chamber;
- feeding means adapted to be received in the first open end of the hollow body, to feed the injection chamber with the material through the passage in the floating punch;
- thrust means adapted to be received in the first open end of the hollow body as an alternative to the feeding means, to make the floating punch slide towards the injection nozzle, thereby causing injection into the mould of the material previously fed to the chamber.

For better explaining the innovative principles of the present invention and the advantages it offers as compared with the known art, a possible embodiment applying these principles will be described hereinafter, by way of non-limiting example, with the aid of the accompanying drawings. In the drawings:
- Fig. 1 is a view of the injector unit of an injection moulding machine in accordance with the present invention;
- Fig. 2 is a sectional view of part of the injector unit in a first step of the injection cycle;
- Fig. 3 is a sectional view of part of the injector unit in a second step of the injection cycle;
- Fig. 4 is a sectional view of part of the injector unit in a third step of the injection cycle;
- Fig. 5 is a sectional view of part of the injector unit in a fourth and last step of the injection cycle.

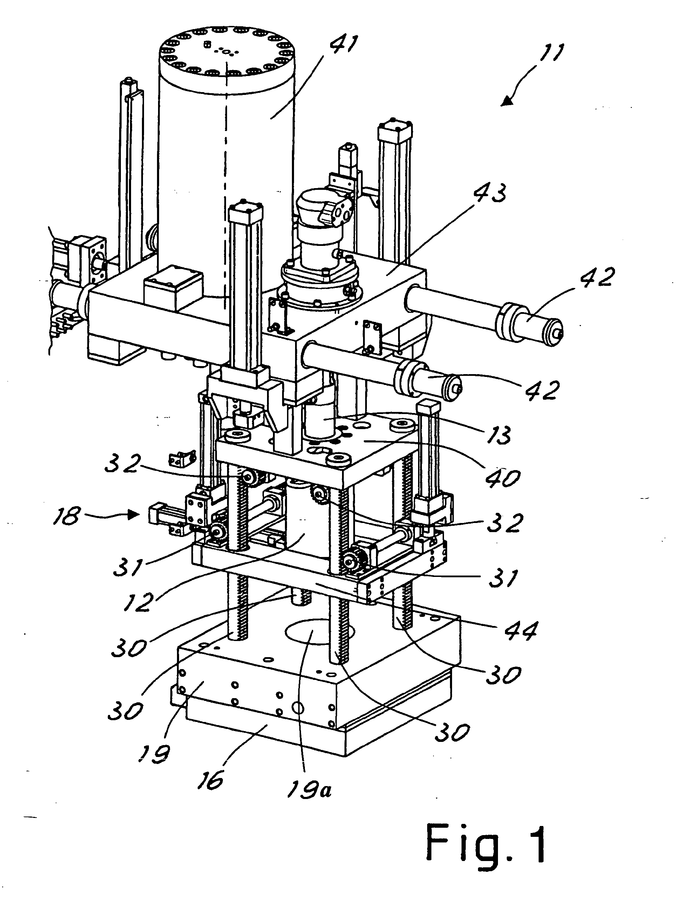

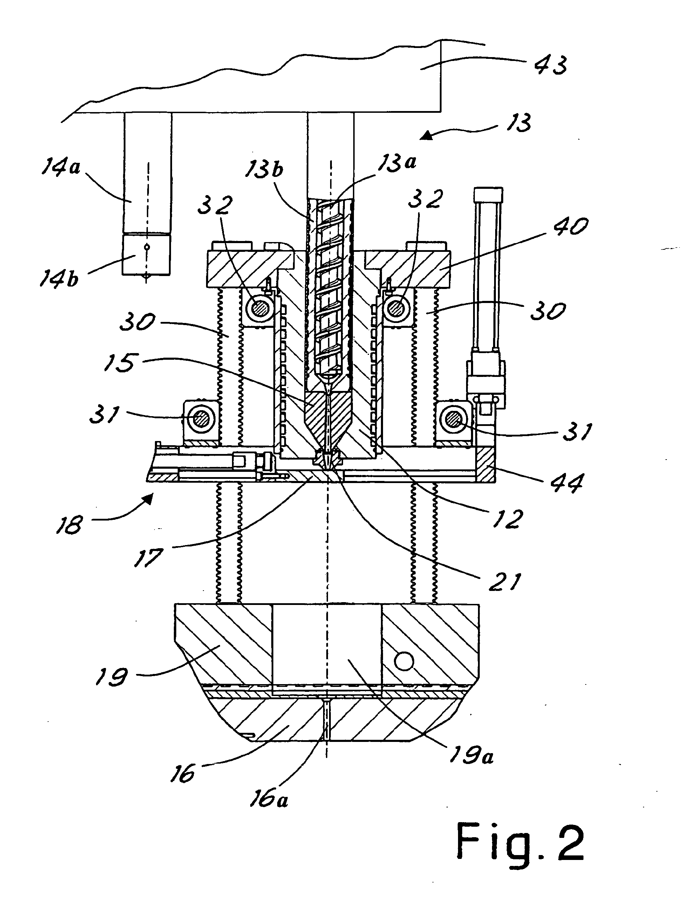

With reference to the drawings, shown in Fig. 1 is an injector unit 11 of an injection moulding machine, to inject rubber for example, in accordance with a preferred embodiment of the invention. This injector unit 11 comprises an injection body 12 within which the injection chamber is located, as widely described in the following. The body 12 is fastened to a support plate 40 and can be vertically moved along the four toothed bars 30 by driving the four cogwheels 32 (only two of which are shown in Fig. 1) in rotation, said cogwheels engaging with the toothed bars 30. The support element 44, to which a counter-plate 17 and the respective horizontal movement system 18 (shown in Fig. 2) are fastened, can move in a vertical direction along the toothed bars 30 in the same manner as the support plate 40. In this case translation is carried out by setting the four cogwheels 31 (only two of which are shown in Fig. 1) in rotation, said cogwheels too being in engagement with the toothed bars 30.

Shown in Fig. 1 is also a plasticizing screw assembly 13 inserted in plate 40 and at the inside of the injection body 12. This plasticizing screw assembly 13 is fastened to a translation carriage 43. The carriage 43 is mounted on two pins 42 so that it can translate in a horizontal direction. This translation can take place when the plate 40 is at a lowered position and the plasticizing screw assembly 13 is no longer inserted in the injection body 12. When the carriage 43 has translated to the right, to the end-of-stroke position, the pusher cylinder 41, also fastened to carriage 43, is over the injection body 12. Projecting from the pusher cylinder 41 at the lower part thereof is an injection piston 14 (not shown in Fig. 1) that is designed to replace the plasticizing screw assembly 13 within the injection body 12, as widely described in the following.

Also shown still in Fig. 1 is part of the mould 16 and a block 19. This block 19 is provided with a cavity 19a designed to receive the injection body 12 when the latter is in its lowered position for injection of rubber into the mould.

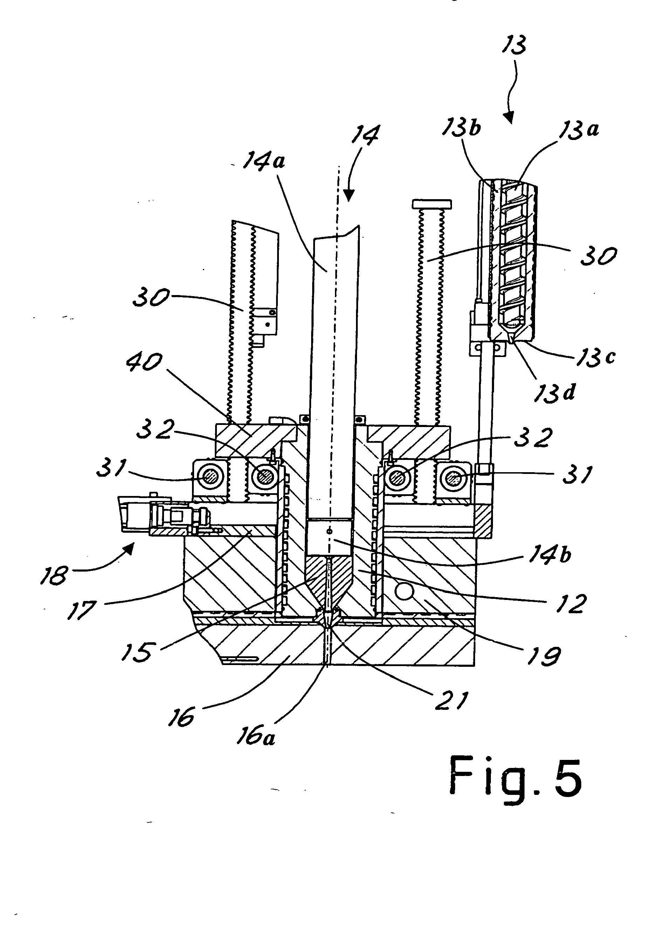

As shown in Figs. 2 to 5, the body 12 is provided with an almost cylindrical vertical cavity within which a floating punch 15 can freely slide in a vertical direction. The floating punch 15 carries out a sealing action and defines an injection chamber 20 together with body 12; this chamber 20 has a variable volume depending on the position of the floating punch 15 relative to body 12. The floating punch 15 is provided with a hole 15c that is coaxial with the cavity of body 12 so as to form an access way to the injection chamber 20. Advantageously, in accordance with known techniques, the hole 15c is of truncated conical form and the major base thereof faces downwards. It is to be noted that the lower end 20a of the cavity of body 12 is of conical shape and the front portion 15b of the floating punch 15 is such shaped as to match the shape of said conical bottom. This front portion 15b tapers preferably with an inclination of 20° or more. Advantageously, the ratio between the longitudinal extension of the floating punch 15 and the punch diameter is included between 0.3 and 5.

Positioned at the lower end 20a of the cavity of body 12 is an injection nozzle 21. The cavity of body 12 is provided, at the upper part thereof, with an open end adapted to alternately receive the plasticizing screw assembly 13 or the thrust piston 14.

The plasticizing screw assembly 13 comprises a plasticizing screw 13a contained in a chamber formed in an outer casing 13b. This screw assembly 13 also comprises a head portion 13c such shaped as to match the shape of the rear face 15a of the floating punch 15. Formed in the middle of the head 13c is a feeding nozzle 13d adapted to engage the hole 15c of the floating punch 15. Advantageously, the outer diameter of the plasticizing screw assembly 13 is smaller than the diameter of the cylindrical cavity of body 12 by at least 0.05 mm. It is to be noted that the plasticizing screw assembly 13 is fed from top and pushes the material towards the feeding nozzle 13d due to an appropriate rotatory motion of the screw 13a.

The injection piston 14 is of cylindrical shape and is adapted to be received into the cavity of body 12, in the same manner as the plasticizing screw assembly 13. This piston 14 is made up of a rod 14a and a thrust head 14b which is also such shaped as to match the shape of the rear face 15a of the floating punch 15.

Shown in Fig. 2 is the configuration taken by the injector unit 11 at the beginning of the step of feeding the injection chamber 20. Actually, this chamber 20 has a null volume in this stage of the moulding cycle, since the floating piston 15 is disposed at the bottom of the cavity of body 12. The plasticizing screw assembly 13 is inserted in the cavity and rests on the rear face 15a of the floating punch 15 by its head portion 13c. Note that the screw assembly 13 is fixed in the vertical direction and can only carry out a horizontal translation; therefore, the configuration in Fig. 2 is obtained by bringing the body 12, fastened to plate 40, to the raised position. The support 44 too, to which the counterplate 17 and the means 18 for the horizontal movement of same are fastened, is in a raised position. The counterplate 17 is such disposed as to close the injection nozzle 21. Starting from this configuration, the step of feeding the injection chamber 20 can begin. The plasticizing screw 13a is driven in rotation to push the rubber material at the inside of the screw assembly 13 into hole 15c of the floating punch 15.

Simultaneously the cogwheels 31 and 32 are driven in a synchronous manner. This operation aims at causing translation of body 12 downwards while maintaining the injection nozzle 21 closed by means of the counterplate 17. During translation, the floating punch 15 remains close to the plasticizing screw assembly 13, so that the injection chamber 20 is formed at the inside of body 12. This chamber 20 receives the rubber material fed through hole 15c. This rubber material is maintained to the correct compacting level because the descent movement of body 12 is regulated (electronically, for example) in such a manner as to oppose some resistance to entry of the rubber into the injection chamber 20.

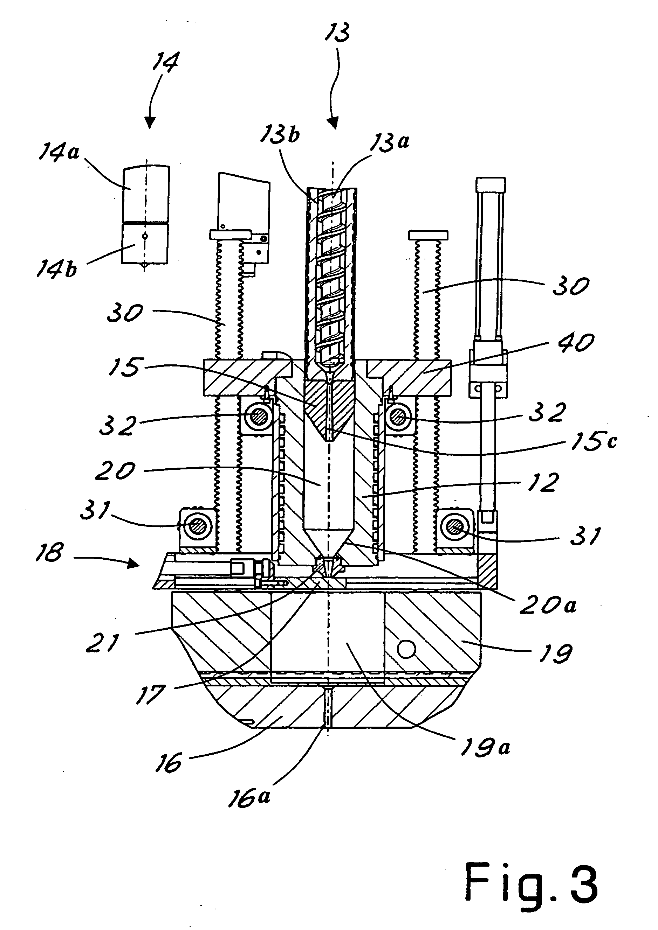

Once the desired amount of rubber has been introduced into the injection chamber 20, feeding from the screw assembly 13 is interrupted, lowering of body 12 stops and the configuration of the injector body as shown in Fig. 3 is reached. Note that body 12 can still move downwards keeping the injection nozzle 21 closed by means of the counterplate 17. In this manner the floating punch 15 can move upwards within the cavity of body 12 to release the pressure generated within the injection chamber 20. This allows the injection nozzle 21 to be opened without rubber sprinkles taking place before the true injection begins. When the inner pressure of chamber 20 has been released, nozzle 21 is opened through operation of the movement means 18 to impose a translation movement to the left to the counterplate 17.

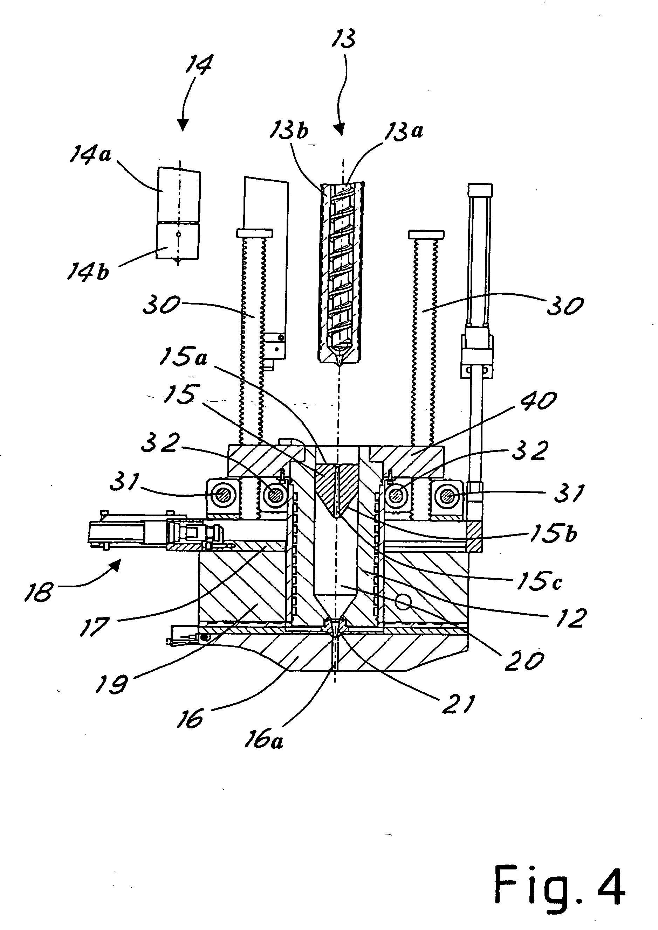

Once the counterplate 17 has been removed from the closed position, the body 12 can further move downwards, still by effect of a suitable rotation of the cogwheels 32 in engagement with bars 30. This downward translation goes on until the configuration shown in Fig. 4 is reached in which the body 12 is at the inside of the cavity 19a of block 19.

In particular, the injection nozzle 21 is coupled with the injection channel 16a in mould 16. The plasticizing screw assembly 13 maintaining its position in height always fixed, is free from its engagement with the cavity of body 12 and is ready to begin its translation movement to the right to reach its rest position.

In Figs. 2 to 4 the injection piston 14 is always shown in its rest position. Once the situation seen in Fig. 4 has been reached, this piston begins translating to the right, being rigidly connected with the plasticizing screw assembly 13. This dual translation can be obtained, as previously described, through sliding of the translation carriage 43 in a horizontal direction on the two pins 42. Once the injection piston 14 has reached a position coaxial with the injection chamber 20, said piston 14 is moved downwards by the pusher cylinder 41 so that it enters the cavity of body 12 and pushes the floating punch 15 towards the injection nozzle 21. In this manner rubber injection into mould 16 takes place, said mould having been suitably discharged and closed again to receive the new metered amount of rubber to be vulcanised.

After the above description, it is apparent that the previously listed purposes of the present invention have been reached. In particular, an injector unit has been made that allows a very precise metering of the amount of material to be injected; in fact, the particular structure with a floating punch does not include any type of non-return valve, thereby avoiding occurrence of the technical problems connected with metering that were present in the machines of the known art, due to the valve arrangement.

In addition, the described injection press enables an injection with a logic of the FIFO (First In First Out) type; in fact, the injection chamber is fed from top through the floating punch, while injection takes place through a nozzle placed to the lower end of the chamber. This situation allows a high degree of homogeneity of the material to be maintained within the injection chamber and, therefore, also within the mould. It is obvious that a material with an improved homogeneity allows a final product of better quality to be obtained.

Obviously, the above description of an embodiment applying the innovative principles of the present invention is only given by way of non-limiting example and therefore must not be considered as a limitation of the scope of the patent rights herein claimed.

## Claims

1. An injection moulding machine, comprising:
- a body (12) provided with a rectilinear cavity having a first end which is open and a second end (20a) opposite to the first one in which a nozzle (21) for injection into the mould (16) is disposed;
- a floating punch (15) that is slidable within the cavity in the hollow body (12) between said first and second ends to define an injection chamber (20) with said second end (20a), said punch being provided with a passage (15c) to supply a way for access to the chamber (20);
- feeding means (13) adapted to be received in the first open end of the hollow body, to feed the injection chamber (20) with the material through the passage (15c) in the floating punch (15);
- thrust means (14) adapted to be received in the first open end of the hollow body (12) as an alternative to the feeding means (13), to make the floating punch (15) slide towards the injection nozzle (21), thereby causing injection into the mould of the material previously fed to the chamber (20).

2. An injection moulding machine as claimed in claim 1, **characterised in that** said feeding means (13) comprises a plasticizing screw assembly.

3. An injection moulding machine as claimed in claim 1, **characterised in that** said thrust means (14) comprises an injection piston.

4. An injection moulding machine as claimed in claim 1,
**characterised in that** the cavity of said body (12) is of cylindrical elongated shape.

5. An injection moulding machine as claimed in claim 1, **characterised in that** said body (12) is movable in the direction of the longitudinal extension of its rectilinear cavity between a position close to the mould (16) and a position of maximum introduction of the feeding means (13) into said cavity.

6. An injection moulding machine as claimed in claims 2 and 5, **characterised in that** the plasticizing screw assembly (13) has a longitudinal axis parallel to that of the cavity of the body (12) and is movable so as to translate, perpendicularly to its axis, alternately between a rest position and an operating position coaxial with the cavity of the body (12).

7. An injection moulding machine as claimed in claims 3 and 5, **characterised in that** the injection piston (14) has a longitudinal axis parallel to that of the cavity of the body (12), is movable so as to translate, perpendicularly to its axis, alternately between a rest position and an operating position coaxial with the cavity of the body (12).

8. An injection moulding machine as claimed in claims 6 and 7, **characterised in that** the plasticizing screw assembly (13) and the injection piston (14) are mounted on a single translation carriage (43) transverse to the axis of the rectilinear cavity, to be brought to their operating position in an alternate manner.

9. An injection moulding machine as claimed in claim 4, **characterised in that** said passage (15c) in the floating punch (15) is a hole coaxial with the cavity of the body (12).

10. An injection moulding machine as claimed in claim 1, **characterised in that** the floating punch (15) is of circular cross section and the ratio between the longitudinal extension and the diameter of same is included between 0.3 and 5.

11. An injection moulding machine as claimed in claim 1, **characterised in that** the floating punch (15) is provided with a front portion (15b) facing the injection chamber (20) that is such shaped as to match the shape of said second end (20a) of the cavity of the body (12).

12. An injection moulding machine as claimed in claim 11, **characterised in that** said front portion (15b) of the floating punch (15) tapers with an inclination of 20° or more.

13. An injection moulding machine as claimed in claim 2, **characterised in that** the plasticizing screw assembly (13) comprises a plasticizing screw (13a) contained in a cylindrical feeding chamber formed at the inside of a casing (13b) of the plasticizing screw assembly (13).

14. An injection moulding machine as claimed in claim 13, **characterised in that** the plasticizing screw assembly (13) comprises a head portion (13c) such shaped as to match the shape of a rear face (15a) of the floating punch (15) and a feeding nozzle (13d) formed in said head portion (13c) to feed the hole (15c) of the floating punch (15) with material.

15. An injection moulding machine as claimed in claims 2 and 4, **characterised in that** the plasticizing screw assembly (13) is externally of cylindrical shape and the outer diameter of same is smaller than the inner diameter of the cavity of the body (12) by at least 0.05 mm.

16. An injection moulding machine as claimed in claim 1, **characterised in that** it comprises a counterplate (17) movable to close the injection nozzle (21) during feeding of material to the chamber (20).

17. An injection moulding machine as claimed in claim 1, **characterised in that** the longitudinal extension direction of the cavity of the body (12) is a vertical direction.

## Patentansprüche

1. Spritzgießmaschine, umfassend:
- einen Körper (12), der mit einem geradlinigem Hohlraum versehen ist, der ein erstes Ende, welches offen ist, und ein zweites Ende (20a) entgegengesetzt bzw. gegenüberliegend zu dem ersten aufweist, in welchem eine Düse (21) zum Einspritzen in die Form (16) angeordnet ist;
- einen schwimmenden bzw. pendelnden bzw. beweglichen Stempel (15), welcher in dem Hohlraum in dem hohlen bzw. Hohlkörper (12) zwischen dem ersten und zweiten Ende gleitbar bzw. verschiebbar ist, um eine Einspritzkammer (20) in dem zweiten Ende (20a) zu definieren, wobei der Stempel mit einem Durchtritt (15c) versehen ist, um einen Weg für einen Zugriff bzw. Zugang zu der Kammer (20) zur Verfügung zu stellen;
- Zufuhrmittel (13), die adaptiert sind, um in dem ersten offenen Ende des Hohlkörpers aufgenommen zu sein, um die Einspritzkammer (20) mit dem Material durch den Durchtritt (15c) in dem pendelnden bzw. beweglichen Stempel (15) zu speisen;
- Schiebemittel (14), die adaptiert sind, um in dem ersten offenen Ende des Hohlkörpers (12) als eine Alternative zu den Zufuhrmitteln (13) aufgenommen zu werden, um den pendelnden bzw. beweglichen Stempel (15) zu der Einspritzdüse (21) gleiten zu lassen, wodurch eine Einspritzung in die Form des vorher zugeführten Materials zu der Kammer (20) bewirkt ist.

2. Spritzgießmaschine nach Anspruch 1, **dadurch gekennzeichnet, daß** die Zufuhrmittel (13) eine weichmachende bzw. Plastifizierschneckenanordnung umfassen.

3. Spritzgießmaschine nach Anspruch 1, **dadurch gekennzeichnet, daß** die Schiebemittel (14) einen Einspritzkolben umfassen.

4. Spritzgießmaschine nach Anspruch 1, **dadurch gekennzeichnet, daß** der Hohlraum des Körpers (12) von zylindrischer länglicher Form ist.

5. Spritzgießmaschine nach Anspruch 1, **dadurch gekennzeichnet, daß** der Körper (12) in der Richtung der länglichen bzw. Längserstreckung seines geradlinigen Hohlraums zwischen einer Position nahe der Form (16) und einer Position eines maximalen Einbringens der Zufuhrmittel (13) in den Hohlraum bewegbar ist.

6. Spritzgießmaschine nach Anspruch 2 und 5, **dadurch gekennzeichnet, daß** die Plastifizierschneckenanordnung (13) eine Längsachse parallel zu jener des Hohlraums des Körpers (12) aufweist und so bewegbar ist, um sich senkrecht zu ihrer Achse alternierend zwischen einer Ruheposition und einer Betriebs- bzw. Betätigungsposition koaxial mit dem Hohlraum des Körpers (12) zu verlagern.

7. Spritzgießmaschine nach Anspruch 3 und 5, **dadurch gekennzeichnet, daß** der Einspritzkolben (14) eine Längsachse parallel zu jener des Hohlraums des Körpers (12) aufweist, bewegbar ist, um sich senkrecht zu seiner Achse alternierend zwischen einer Ruheposition und einer Betätigungsposition koaxial mit dem Hohlraum des Körpers (12) zu verlagern.

8. Spritzgießmaschine nach Anspruch 6 und 7, **dadurch gekennzeichnet, daß** die Plastifizierschneckenanordnung (13) und der Einspritzkolben (14) auf einem einzigen Verschiebungs- bzw. Translationsschlitten (43) quer zu der Achse des geradlinigen Hohlraums montiert bzw. festgelegt sind, um in ihre Betriebsposition in einer abwechselnden bzw. alternierenden Weise gebracht zu werden.

9. Spritzgießmaschine nach Anspruch 4, **dadurch gekennzeichnet, daß** der Durchtritt (15c) in dem pendelnden Stempel (15) ein Loch koaxial mit dem Hohlraum des Körpers (12) ist.

10. Spritzgießmaschine nach Anspruch 1, **dadurch gekennzeichnet, daß** der pendelnde Stempel (15) von kreisförmigem Querschnitt ist und das Verhältnis zwischen der Längserstreckung und dem Durchmesser desselben zwischen 0,3 und 5 liegt.

11. Spritzgießmaschine nach Anspruch 1, **dadurch gekennzeichnet, daß** der pendelnde Stempel (15) mit einem vorderen Abschnitt (15b) versehen ist, der zu der Einspritzkammer (20) schaut, welcher derart geformt ist, um mit der Form des zweiten Endes (20a) des Hohlraums des Körpers (12) übereinzustimmen.

12. Spritzgießmaschine nach Anspruch 11, **dadurch gekennzeichnet, daß** sich der vordere Abschnitt (15b) des pendelnden Stempels (15) mit einer Neigung von 20° oder mehr verjüngt.

13. Spritzgießmaschine nach Anspruch 2, **dadurch gekennzeichnet, daß** die Plastifizierschneckenanordnung (13) eine Plastifizierschnecke bzw. -schraube (13a) umfaßt, die in einer zylindrischen Zufuhrkammer enthalten ist, die an der Innenseite eines Gehäuses (13b) der Plastifizierschneckenanordnung (13) ausgebildet ist.

14. Spritzgießmaschine nach Anspruch 13, **dadurch gekennzeichnet, daß** die Plastifizierschneckenanordnung (13) einen Kopfabschnitt (13c), der derart geformt ist, um mit der Form einer rückwärtigen Seite bzw. Fläche (15a) des pendelnden Stempels (15) übereinzustimmen, und eine Zufuhrdüse (13d) umfaßt, die in dem Kopfabschnitt (13c) ausgebildet ist, um das Loch (15c) des pendelnden Stempels (15) mit Material zu speisen.

15. Spritzgießmaschine nach Anspruch 2 und 4, **dadurch gekennzeichnet, daß** die Plastifizierschneckenanordnung (13) extern bzw. an der Außenseite von einer zylindrischen Form ist und der Außendurchmesser derselben kleiner als der Innendurchmesser des Hohlraums des Körpers (12) um wenigstens 0,05 mm ist.

16. Spritzgießmaschine nach Anspruch 1, **dadurch gekennzeichnet, daß** sie eine Gegenplatte (17) umfaßt, die bewegbar ist, um die Einspritzdüse (21) während eines Zuführens von Material zu der Kammer (20) zu verschließen.

17. Spritzgießmaschine nach Anspruch 1, **dadurch gekennzeichnet, daß** die Längserstreckungsrichtung des Hohlraums des Körpers (12) eine vertikale Richtung ist.

## Revendications

1. Presse à injecter, comprenant:
- un corps (12) muni d'une cavité rectiligne ayant une première extrémité qui est ouverte et une seconde extrémité (20a) opposée à la première extrémité dans laquelle est disposée une tuyère (21) pour l'injection dans le moule (16);
- un poinçon flottant (15) qui coulisse à l'intérieur de la cavité dans le corps creux (12) entre lesdites première et seconde extrémités à définir une chambre d'injection (20) avec ladite seconde extrémité (20a), ledit poinçon étant muni d'un passage (15c) pour fournir une voie d'accès à la chambre (20);
- des moyens d'alimentation (13) aptes à être reçus dans la première extrémité ouverte du corps creux, pour alimenter en la matière la chambre d'injection (20) à travers le passage (15c) dans le poinçon flottant (15);
- des moyens de poussée (14) aptes à être reçus dans la première extrémité ouverte du corps creux (12) comme alternative aux moyens d'alimentation (13), pour produire le coulissement du poinçon flottant (15) vers la tuyère d'injection (21) de manière à causer l'injection dans le moule de la matière alimentée précédemment à la chambre (20).

2. Presse à injecter selon la revendication 1, **caractérisée en ce que** lesdits moyens d'alimentation (13) comportent un groupe vis de plastification.

3. Presse à injecter selon la revendication 1, **caractérisée en ce que** lesdits moyens de poussée (14) comportent un piston à injecter.

4. Presse à injecter selon la revendication 1, **caractérisée en ce que** la cavité dudit corps (12) est de forme cylindrique allongée.

5. Presse à injecter selon la revendication 1, **caractérisée en ce que** ledit corps (12) est mobile dans la direction de l'extension longitudinale de sa cavité rectiligne entre une position à proximité du moule (16) et une position d'introduction maximum des moyens d'alimentation (13) dans ladite cavité.

6. Presse à injecter selon les revendications 2 et 5, **caractérisée en ce que** le groupe vis de plastification (13) a un axe longitudinal parallèle à celui de la cavité du corps (12) et est mobile de manière à effectuer une translation alternée, perpendiculaire à son axe, entre une position de repos et une position de travail coaxiale à la cavité du corps (12).

7. Presse à injecter selon les revendications 3 et 5, **caractérisée en ce que** le piston à injecter (14) a un axe longitudinal parallèle à celui de la cavité du corps (12), est mobile de manière à effectuer une translation, perpendiculairement à son axe, alternativement entre une position de repos et une position de travail coaxiale à la cavité du corps (12).

8. Presse à injecter selon les revendications 6 et 7, **caractérisée en ce que** le groupe vis de plastification (13) et le piston à injecter (14) sont montés sur un chariot de translation unique (43) transversal à l'axe de la cavité rectiligne, pour être amenés à leur position de travail de manière alternante.

9. Presse à injecter selon la revendication 4, **caractérisée en ce que** ledit passage (15c) dans le poinçon flottant (15) est un trou coaxial à la cavité du corps (12).

10. Presse à injecter selon la revendication 1, **caractérisée en ce que** le poinçon flottant (15) est de forme circulaire en coupe et le rapport entre l'extension longitudinale et le diamètre de celui-ci est compris entre 0,3 et 5.

11. Presse à injecter selon la revendication 1, **caractérisée en ce que** le poinçon flottant (15) est muni d'une portion avant (15b) tournée vers la chambre d'injection (20) laquelle est conformée de manière à épouser la forme de ladite seconde extrémité (20a) de la cavité du corps (12).

12. Presse à injecter selon la revendication 11, **caractérisée en ce que** ladite portion avant (15b) du poinçon flottant (15) va en diminuant selon une inclinaison de 20° ou supérieure.

13. Presse à injecter selon la revendication 2, **caractérisée en ce que** le groupe vis de plastification (13) comporte une vis de plastification (13a) contenue dans une chambre d'alimentation cylindrique formée à l'intérieur d'une enveloppe (13b) du groupe vis de plastification (13).

14. Presse à injecter selon la revendication 13, **caractérisée en ce que** le groupe vis de plastification (13) comporte une portion de tête (13c) conformée de manière à épouser la forme d'une face arrière (15a) du poinçon flottant (15) et une tuyère d'alimentation (13d) formée dans ladite portion de tête (13c) pour alimenter en la matière le trou (15c) du poinçon flottant (15).

15. Presse à injecter selon les revendications 2 et 4, **caractérisée en ce que** le groupe vis de plastification (13) est de forme cylindrique à son extérieur et le diamètre extérieur de celui-ci est plus petit que le diamètre intérieur de la cavité du corps (12) d'au moins 0,05 mm.

16. Presse à injecter selon la revendication 1, **caractérisée en ce qu'**elle comporte une contre-plaque (17) mobile pour fermer la tuyère d'injection (21) pendant que la chambre (20) est alimentée en la matière.

17. Presse à injecter selon la revendication 1, **caractérisée en ce que** la direction d'extension longitudinale de la cavité du corps (12) est une direction verticale.
